# EUROPEAN PATENT APPLICATION

(11) **EP 4 383 665 A1**
(43) Date of publication of application: **12.06.2024**
(21) Application number: 22212193.1
(22) Date of filing: 08.12.2022
(51) Int. Cl.: H04L 41/16, H04L 41/0803

(54) **SYSTEM AND METHOD FOR FINDING CONFIGURATION MAPPINGS IN MONITORING NETWORKS**

(71) Applicant: Siemens Aktiengesellschaft, 80333 München (DE)
(72) Inventor: Blenk, Andreas, 86916 Kaufering (DE); Zeiger, Florian, 85635 Höhenkirchen-Siegertsbrunn (DE)
(74) Representative: Siemens Patent Attorneys

(57) **Abstract**

A search system for finding configuration mappings in a monitoring network connecting physical assets with their associated digital twins, the search system comprising: a control module, configured to receive a request of operation intent related to a physical asset and to implement a configuration mapping in the monitoring network; a configuration finder module, configured to generate configuration mappings, based on the operation intent related to the physical asset; and a configuration selection module, configured to select one of the generated configuration mappings and send it to the control module for its implementation in the monitoring network.

## Description

Independent of the grammatical term usage, individuals with male, female or other gender identities are included within the term.

The present invention relates to a system and a method for finding configuration mappings in monitoring networks connecting physical assets with their associated digital twin.

The invention is mostly described with respect to a search system connecting a number of physical assets to their digital twins, but the principles of the invention have a broader scope and apply equally well to more general search systems, in particular those involved in industrial metaverse environments.

Digital twins are employed nowadays ubiquitously in industrial applications and their associated operation services, for instance in the design, testing, maintenance, surveillance, failure prediction or training of different industrial components.

Digital twins are powerful tools to generate future predictions of industrial products or systems, perform related what-if analyses or general simulations. Such possibilities provide valuable information to support decision making in the abovementioned industrial applications. Digital twins are not restricted to replicate physical products but can be extended to provide digital replicas of networks, the so-called network digital twins.

The increase in the number of digitalized physical assets and digitalized networks is part of the ideas behind the industrial metaverse and poses increasing demands on the monitoring networks responsible to communicate the digital twins to their physical counterparts. In particular, the networks should be fast and reliable in order to ensure a continuous data flow, in order to provide a seamless transmission of the operation on the physical assets to the digital twins.

Conventional network control units monitor, control and set up configurations for the network in order to provide network operations that guarantee the communication between the physical assets and the digital twins.

However, most of these network control units provide only a basic configuration, which satisfies only basic demands of operation. Furthermore, the network control units might work under the assumption that the network has a large availability of resources (e.g. bandwidth, buffer space or queues). This is far from optimal and in particular can lead to over-provisioning of the network.

More sophisticated network control units incorporate a catalogue of configuration mappings. This provides more flexibility and the network can adapt to a larger set of operation scenarios. However, even these new configurations might not be enough to provide a satisfactory solution to particular operations. In the best-case scenario, the data-exchange flow is guaranteed but the communication between physical assets and digital twins is sub-optimal, i.e., the network resources are not optimally used. In the worst-case scenario, no suitable configuration might exist for a particular operation and the network cannot transfer the operations of the physical assets to the digital twins. Currently, a suitable configuration is determined by a brute force analysis requiring human intervention, and during such analysis the network service has to be interrupted or paused.

As the number of digitalized physical assets increases and their operations become more complex, the requirements of the network services also grow and become more demanding. Accordingly, there is a need for reliable network services which are resilient to the different operations that can be performed on the physical assets. Moreover, they should also be adapted to handle the simultaneous operations of different physical assets with different network demands while minimizing network interruptions.

It is an object of the present invention to provide an improved network control system, able to: (i) efficiently generate optimized configuration mappings adapted to the different operations required in complex network environments connecting a number of physical assets with their respective digital twins; and (ii) minimize the network interruption times.

The purpose of this invention is achieved through a search system with the features disclosed in claim 1 and a computer-implemented method with the features detailed in claim 13.

Preferred embodiments of the invention with advantageous features are given in the dependent claims.

Independent of the grammatical term usage, individuals with male, female or other gender identities are included within the term.

A first aspect of the invention provides a search system for finding configuration mappings in a network (or communication network, or also monitoring network) connecting physical assets with their associated digital twins, the search system comprising: a control module, configured to receive a request of operation intent related to a physical asset and to implement a configuration mapping in the monitoring network; a configuration finder module, configured to generate configuration mappings, based on the operation intent related to the physical asset; and a configuration selection module, configured to select one of the generated configuration mappings and send it to the control module for its implementation in the monitoring network.

Physical assets are any physical objects relevant in an industrial environment and susceptible to be replicated digitally. Physical assets might also include the communication network(s) used in those industrial environments.

A digital twin is a real-time digital replica of all or some of the characteristics of a physical asset, therewith being able to digitally replicate and simulate the behaviour of the physical asset. Digital twins enable an inspection of the present and the projected future condition of a physical product or communication network, the simulation of what-if scenarios, and provide useful information for the prevention of future setbacks.

A monitoring network comprises any system using communication and information technology that is used to connect the physical assets with their digital twins. The network can bring data from the physical assets either at runtime or offline, through a wired connection or a wireless one. The montoring network can be a physical apparatus (e.g. a computer) or a virtual machine on, e.g., a cloud computing platform.

Configuration mappings are network settings that deploy different resources of the monitoring network based on the operation demands of the physical assets and their corresponding digital twins.

A request of operation intent is a notification produced by a production operator or user to the monitoring network, indicating a wanted modification in the status of a physical asset. The request requires a different deployment of the resources of the monitoring network. If the request is allowed, the operation can be correctly transferred to the digital twin.

The different modules mentioned in this application are broadly understood as entities capable of acquiring, obtaining, receiving or retrieving generic data and/or instructions through a user interface and/or programming code and/or executable programs or any combination thereof. The different modules are adapted to run programming code and executable programs and to deliver the results for further processing.

The different modules, or parts thereof, may therefore each contain, at least, a central processing unit, CPU, and/or at least one graphics processing unit, GPU, and/or at least one field-programmable gate array, FPGA, and/or at least one application-specific integrated circuit, ASIC and/or any combination of the foregoing. Each of them may further comprise a working memory operatively connected to the at least one CPU and/or a non-transitory memory operatively connected to the at least one CPU and/or the working memory. Each of them may be implemented partially and/or completely in a local apparatus and/or partially and/or completely in a remote system such as by a cloud computing platform.

All of the elements of the search system may be realized in hardware and/or software, cable-bound and/or wireless, and in any combination thereof. Any of the elements may comprise an interface to an intranet or the Internet, to a cloud computing service, to a remote server and/or the like.

In particular, the search system of the invention may be implemented partially and/or completely in a local apparatus, e.g. a computer, in a system of computers and/or partially and/or completely in a remote system such as a cloud computing platform.

In systems based on cloud computing technology, a large number of devices is connected to a cloud computing system via the Internet. The devices may be located in a remote facility connected to the cloud computing system. For example, the devices can comprise, or consist of, equipments, sensors, actuators, robots, and/or machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographically distributed and connected to each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

A second aspect of the present invention provides a computer-implemented method for finding configuration mappings in a monitoring network connecting physical assets with their associated digital twins, comprising the following steps: (a) receiving a request of operation intent related to a physical asset; (b) generating configuration mappings based on the operation intent related to the physical asset; (c) selecting one of the generated configuration mappings; and (d) implementing the selected configuration mapping in the monitoring network.

In particular, the method according to the second aspect of the invention may be carried out by the system according to the first aspect of the invention. The features and advantages disclosed herein in connection with the search system are therefore also disclosed for the method, and vice versa.

According to a third aspect, the invention provides a computer program product comprising executable program code configured to, when executed, perform the method according to the second aspect of the present invention.

According to a fourth aspect, the invention provides a non-transient computer-readable data storage medium comprising executable program code configured to, when executed, perform the method according to the second aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to the second aspect of the present invention.

One of the main ideas underlying the present invention is to provide a system to search for configuration mappings in monitoring networks connecting physical assets and digital twins, in an efficient and automatized way. The system comprises a control module, adapted to receive a request for an operation intent upon a physical asset. A configuration selection module is configured to select a suitable configuration from a number of existing configuration mappings. If no suitable existing configuration is found, a configuration finder module is used to generate suitable configuration mappings, out of which the configuration selection module is configured to select one, which is implemented by the control module into the monitoring network, such that the operation intent can be transmitted to the corresponding digital twin.

The search system as described above allows for a simple implementation of a computer-implemented method for finding configuration mappings in a monitoring network connecting physical assets with their associated digital twins. The method comprises receiving a request of operation intent related to a physical asset, e.g. by a production operator. A number of configuration mappings are generated at runtime that can provide the network demands associated with the requested operation intent, out of which one is selected and implemented in the network to transmit the operation on the physical asset to the corresponding digital twin.

One advantage of the present invention is that it provides a quicker and more efficient response to the different network demands required by the different operations on the physical assets. The system can customize optimal configuration mappings to specific operation intents, which is to be compared with the predetermined configuration mappings of conventional network control units.

A further advantage of the present invention is that more complex situations can be handled, with a thorough exploration of possible configuration mappings. This is particularly important for applications in metaverse environments, where the increasing complexity of the network makes it impracticable to find solutions by hand, i.e. based solely on human intervention.

Another advantage of the present invention is that it is improvable. The search system generates new configuration mappings but it can also improve the currently implemented ones. As a result, a growing catalogue of solutions is made available, which guarantees a progressive reduction in the waiting time for operation intents to be processed. These solutions can also be generated in a wider variety of network scenarios, e.g. in order to have configuration mappings ready in case of current link failures or other incidences.

Advantageous embodiments and further developments follow from the dependent claims as well as from the description of the different preferred embodiments illustrated in the accompanying figures.

According to some embodiments, refinements, or variants of embodiments, the configuration finder module comprises a fidelity unit, configured to generate a fidelity measure for each configuration mapping based on a comparison between a physical asset and its associated digital twin.

A fidelity measure can be associated to each of the configuration mappings and evaluates the faithfulness of the network to replicate the operations on the physical assets to the digital twins. A fidelity measure can be determined by observing the characteristics of the physical asset and the associated digital twin, which can be determined once a configuration mapping has been implemented or also by using a simulation involving the said configuration mapping. The fidelity measure can be the selecting criterion used by the configuration selection module to select a configuration mapping.

According to some embodiments, refinements, or variants of embodiments, the configuration finder module is configured to search for alternative configuration mappings to the implemented configuration mapping offline and/or at runtime and rank them according to their fidelity measures.

The configuration finder module can generate configuration mappings at runtime but also generate new configuration mappings and/or improve existing configuration mappings offline. This can be done, e.g., by evaluating the performance of the current configuration mapping using the associated fidelity measure. If a better configuration mapping is found, i.e. a configuration mapping with a better fidelity measure, the configuration finder module can communicate the improved configuration mapping to the configuration selection module, which can suggest the upgrade to the control module.

This is particularly useful in cases where a near-to-optimal configuration mapping exists. In these cases, pausing the operation of the physical assets can be avoided by implementing the existing, near-to-optimal configuration mapping. The configuration finder module can be set to simultaneously search for an optimal configuration mapping. When found, this optimal configuration mapping can replace the near-to-optimal one in a seamless way, without interrupting the operation of the monitoring network.

According to some embodiments, refinements, or variants of embodiments, the configuration finder module is further configured to send the alternative configuration mapping with the highest fidelity measure to the configuration selection module for its implementation.

In these embodiments, especially when there is no new operation intent involved, the configuration finder module can communicate the improvements on the current configuration mapping to the configuration selection module, which guarantees a fast and efficient upgrading of the current configuration mapping.

According to some embodiments, refinements, or variants of embodiments, the configuration selection unit comprises a configuration library unit, configured to store the configuration mappings found by the configuration finder module.

This way the catalogue of available solutions included in the configuration selection module keeps growing and can take care, progressively, of more operation scenarios. As soon as a suitable configuration mapping exists, the implementation of the new configuration mapping can proceed seamlessly, without having to pause the operation of the physical assets. The more configuration mappings that are in storage, the more situations that are automatically covered by the configuration selection module and can be readily implemented by the control module. Each of the configuration mappings can be stored together with its associated fidelity measure.

According to some embodiments, refinements, or variants of embodiments, the configuration finder module comprises a data-acquisition unit, configured to acquire data from the physical assets, the digital twins and the monitoring network.

In order to find suitable configuration mappings, the configuration finder module needs information at least about the physical assets, the digital twins and the network state. This information is most efficiently acquired by retrieving it directly from the source. The data-acquisition unit can therefore be wired or wirelessly connected to the physical assets, the monitoring network and the digital twins.

According to some embodiments, refinements, or variants of embodiments, the configuration finder module comprises a search unit and/or is connected through an interface to an external search unit, wherein the search unit and the external search unit are configured to implement a search algorithm.

A search algorithm in this invention is understood as a mathematical algorithm, possibly comprising statistical methods, which is implementable, at least partially, as a programming code with executable programs.

The search algorithm can belong to a genetic algorithm, use Bayesian optimization or incorporate reinforcement learning. The search algorithm can therefore also comprise artificial intelligence elements, in which case it will be denoted as an artificial intelligence search algorithm.

Such search algorithms can explore thoroughly the configuration space to find suitable configuration mappings adapted to different situations, taking into account at least information on the physical assets, the digital twins and the monitoring network.

According to some embodiments, refinements, or variants of embodiments, the configuration finder module comprises a virtual network unit, configured to generate a digital twin of the monitoring network.

The generation of this digital replica of the network, or network digital twin, allows the search system to search more efficiently, e.g., by simulating the effects of the different configuration mappings on the monitoring network in advance.

This network digital twin can be updated, e.g., by comparing the data of the physical assets coming directly from the physical asset with the data of the physical assets coming from the monitoring network. That is, by observing the timing behavior of the transmitted network data, the configuration finder module can learn about the behavior of the monitoring network.

According to some embodiments, refinements, or variants of embodiments, the search algorithm implemented in the search unit and/or in the external search unit is adapted to use the digital twin of the monitoring network generated by the virtual network unit as input.

Incorporating information of the network digital twin into the search algorithm allows the system to incorporate the effect of the network, in particular the synchronization of physical asset and its digital twin, in the process of generating suitable configuration mappings. Taking the network behavior into account results in configuration mappings that lead to an improved behavior of the overall system.

According to some embodiments, refinements, or variants of embodiments, the virtual network unit comprises a processing unit, configured to process the digital twin of the monitoring network, wherein the search algorithm is adapted to use the processed digital twin of the monitoring network as a variable.

In these embodiments, the network digital twin becomes a digital asset. By considering different variants or modified versions of the network digital twin, different solutions can be generated. These solutions comprise the physical assets, the digital twins, the network variants/versions and the operation intents together with the configuration mappings found by the search algorithm. These solutions can also become a digital asset, in the sense that they can be replicated, traded, or used to enable automated operations in metaverse environments.

According to some embodiments, refinements, or variants of embodiments, the configuration finder module comprises an optimization unit, configured to implement an artificial intelligence entity, which is trained and adapted to improve the algorithm of the search unit.

Whenever herein an artificial intelligence entity is mentioned, it shall be understood as a computerized entity able to implement different data analysis methods broadly described under the terms artificial intelligence, machine learning, deep learning or computer learning. The artificial intelligence entity can be a generative adversarial network (GAN), a convolutional neural network (CNN) or any other neural network.

The artificial intelligence entity can be trained with past operations of the system on the network, for instance taking into account the corresponding configuration mappings chosen for the different operation intents with their fidelity measures.

The artificial intelligence entity can also be trained with operations of similar systems on other networks, in order to increase the training data, or with a combination of past operations of the system on the network and of similar systems on other networks. This can be easily realizable, e.g., in a metaverse environment.

According to some embodiments, refinements, or variants of embodiments, the virtual network unit is further configured to acquire data from a first digital twin of a physical asset and a second digital twin of the same physical asset, wherein the second digital twin is generated from the first digital twin using the monitoring network, i.e., the data of the first digital twin is transmitted via the monitoring network to the second digital twin.

The operation of the network digital twin can be improved by simulating operation intents on the first digital twin and observing the effects on the second digital twin. The effect of the network is an element that influences the fidelity measure of a configuration mapping. Improvements on the network digital twin therefore provide better input to the search algorithm and more accurate configuration mappings, i.e., configuration mappings with a higher fidelity measure.

Although here, in the foregoing and also in the following, some functions are described as being performed by modules or units, it shall be understood that this does not necessarily mean that such modules or units are provided as entities separate from one another. In cases where one or more modules or units are provided as software, the modules or units may be implemented by program code sections or program code snippets, which may be distinct from one another but which may also be interwoven or integrated into one another.

Similarly, in cases where one or more modules or units are provided as hardware, the functions of one or more modules or units may be provided by one and the same hardware component, or the functions of several modules or units may be distributed over several hardware components, which need not necessarily correspond to the modules or units. Thus, any apparatus, system, method and so on which exhibits all of the features and functions ascribed to a specific module or unit shall be understood to comprise, or implement, said module or said unit. In particular, it is a possibility that all modules or units are implemented by program code executed by the computing device, for example a server or a cloud computing platform.

The above embodiments and implementations can be combined with each other as desired, as far as this is reasonable.

Further scope of the applicability of the present method and system will become apparent from the following figures, detailed description and claims. However, it should be understood that the detailed description and specific examples, while indicating preferred embodiments of the invention, are given by way of illustration only, since various changes and modifications within the spirit and scope of the invention will become apparent to those skilled in the art.

Aspects of the present disclosure will be better understood with reference to the following figures.

In the figures:
- Fig. 1: is a schematic depiction of a search system for finding configuration mappings in a monitoring network according to an embodiment of the present invention;
- Fig. 2: is a block diagram showing an exemplary embodiment of a computer-implemented method for finding configuration mappings in a monitoring network according to the present invention;
- Fig. 3: is another block diagram of an exemplary embodiment of a computer-implemented method for finding configuration mappings in a monitoring network according to the present invention;
- Fig. 4: is a schematic illustration of a use case in a monitoring network connecting physical assets with digital twins, according to the state of the art;
- Fig. 5: is a schematic illustration of a use case in a monitoring network connecting physical assets with digital twins, according to an embodiment of the present invention;
- Fig. 6: is a schematic depiction of the elements involved for the improvement of the network digital twin according to an embodiment of the present invention;
- Fig. 7: is a schematic block diagram illustrating a computer program product according to an embodiment of the third aspect of the present invention; and
- Fig. 8: is a schematic block diagram illustrating a non-transitory computer-readable data storage medium according to an embodiment of the fourth aspect of the present invention.

Parts in the different figures that correspond to the same elements have been indicated with the same reference numerals.

The components in the drawings are not necessarily to scale, emphasis being placed instead upon clearly illustrating the principles of the present disclosure. Likewise, certain components can be shown in generalized or schematic form in the interest of clarity and conciseness. In some instances, well-known structures and devices are shown in block diagram form in order to avoid obscuring the concepts of the present invention.

The numeration of the steps in the methods are meant to ease their description. They do not necessarily imply a certain ordering of the steps. In particular, several steps may be performed concurrently.

The detailed description includes specific details for the purpose of providing a thorough understanding of the present invention. However, it will be apparent to those skilled in the art that the present invention may be practised without these specific details.

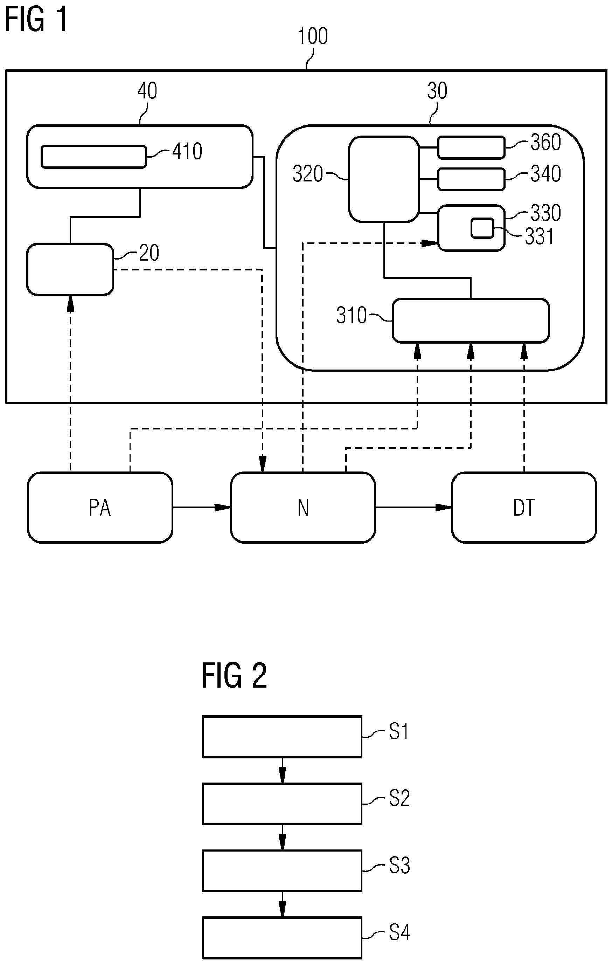

Fig. 1 shows a schematic depiction of a search system 100 for finding configuration mappings in a monitoring network N according to an embodiment of the present invention.

The search system 100 depicted in Fig. 1 comprises a control module 20, a configuration finder module 30 and a configuration selection module 40.

The control module 20 is configured to receive a request of operation intent related to a physical asset PA, e.g. by a production operator in charge of the physical asset. The control module 20 is further configured to implement a configuration mapping in the monitoring network N, under which the monitoring network N will transmit the data from the physical assets PA to the digital twins DT.

The configuration finder module 30 is configured to generate configuration mappings at runtime, i.e., to take into account the network needs of the operation intent received by the control module 20.

In the embodiment depicted in Fig. 1, the configuration finder module 30 comprises a data-acquisition unit 310, a search unit 320, a fidelity unit 360, an optimization unit 340 and a virtual network unit 330.

The data-acquisition unit 310 is configured to acquire: (i) data from the physical assets PA, e.g. from sensor or actuators installed on them or in their vicinity, but also from applications or services associated to the physical assets PA; (b) data from the digital twins DT, e.g. their configuration and properties and in general those characteristics associated with the data acquired from the physical assets PA; and (c) data from the monitoring network N, including those settings determined by the currently implemented configuration mapping under which the monitoring network N is operating.

The search unit 320 is configured to implement a search algorithm, e.g. a genetic algorithm, an algorithm based on Bayesian optimization or an algorithm incorporating elements of reinforced learning or artificial intelligence in general.

With the search algorithm, the search unit 320 can explore thoroughly the configuration space to find suitable configuration mappings adapted to different situations, mostly to accommodate different operation intents related to the physical assets, but also to generate valid and efficient network configurations in case of link failures or other unexpected incidences.

The search algorithm is configured to use as input, at least, the information on the physical assets PA, the digital twins DT and the monitoring network N acquired through the data-acquisition unit 310.

The fidelity unit 360 is configured to generate a fidelity measure for each configuration mapping found by the search unit 320. The fidelity measure of a particular configuration mapping is calculated as the difference of the physical asset PA with its associated digital twin DT obtained with the particular configuration mapping. In other words, a fidelity measure assesses the quality of a configuration mapping, i.e., how faithful a replica of the physical asset PA the digital twin DT is.

The optimization unit 340 is configured to implement an artificial intelligence entity, trained and adapted to improve the search algorithm. The artificial intelligence entity can be, e.g., a generative adversarial network (GAN), a convolutional neural network (CNN) or any other neural network. It can be trained with past operations executed by the search system 100 on the network, preferably with information on the fidelity measure associated to the configuration mapping adopted for each of these operations.

In order to increase the amount of training data, the artificial intelligence entity can also be trained by using as training data the past operations of systems similar to the search system 100. This can be realized, e.g., in metaverse environments, in which many search systems can be interconnected. Another possibility for the training data is to use a combination of past operations of the search system 100 and of similar systems.

The virtual network unit 330 is configured to generate a digital twin of the monitoring network N. The generation of a network digital twin has several advantages. First of all, it allows to simulate the effects of the different configuration mappings on the monitoring network N in advance, thus making the search for configuration mappings more accurate. Additionally, the network digital twin can be used as input by the search algorithm. In this case, the search takes into account the effects of the monitoring network N regarding the synchronization of the physical assets PA and the digital twins DT. Further, since the monitoring network N has a direct impact on the fidelity measure, involving the network digital twin into the search leads to configuration mappings with higher fidelity measures.

The network digital twin can be updated, e.g., by comparing the data of the physical assets PA coming directly from the physical assets PA with the data of the physical assets PA coming from the monitoring network N.

The activity of the configuration finder module 30 can take place in different operation modes. It can provide configuration mappings at runtime, based on a request of operation intent, but it can also run searches offline.

These offline searches can be related to the current configuration mapping, aiming at improving it, or can be related to hypothetical scenarios. In the former case, the fidelity measure can be used as a comparison criterion among different configuration mappings. In some embodiments, the improvements of the current configuration mappings found in this way can be sent by the configuration finder module 30 directly to the control module 20 for their implementation.

For the analysis of hypothetical scenarios, in particular the exploration of configuration mappings corresponding to unexpected incidences, it might be advantageous to have a complete digital-twin-based environment, where the physical asset PA and the monitoring network N are replaced by digital twins (not shown in the figure). This setting enables the search for configuration mappings in parallel to the operation of the monitoring network N, which leads to speed and efficiency gains.

In an additional operation mode, the network digital twin can also be used as a variable in the search algorithm. In these embodiments, the virtual network unit 330 comprises a processing unit 331, configured to process the network digital twin and generate different variants or versions of it, which are used to generate different solutions. These solutions comprise the physical assets, the digital twins, the network variants/versions and the operation intents together with the configuration mappings found by the search algorithm. In this operation mode, both the network digital twin and the found solutions become a digital asset: they can be replicated in different systems, traded, or can be use to enable automated operations in metaverse environments.

The configuration selection module 40 is configured to select one of the configuration mappings generated by the configuration finder module 30 and send it to the control module 20 for its implementation in the monitoring network N. In some embodiments, the configuration selection module 40 can use the fidelity measure as selection criterion.

In the embodiment depicted in Fig. 1, the configuration selection module 40 comprises a configuration library unit 410, configured to store the configuration mappings found by the configuration finder module 30.

In some embodiments of the present invention, when the configuration finder module 30 finds an improved solution of the current network demands, it sends the configuration mapping with the highest fidelity measure to the configuration selection module 40 for its implementation. The updated configuration mapping can be stored in the configuration library unit 410.

Fig. 2 is a block diagram showing an exemplary embodiment of a computer-implemented method for finding configuration mappings in a monitoring network N, preferably to be implemented with the search system 100 depicted in Fig. 1, possibly without the configuration library unit 410. The method comprises a number of steps.

In a step S1, a request for an operation intent related to a physical asset PA is received, e.g. by the control module 20. The sender can be, e.g., a production operator or a user.

In a step S2, configuration mappings are generated, e.g. by the configuration finder module 30, based at least on the request for operation intent, information about the patent assets PA, the monitoring unit N and the digital twins DT.

In a step S3, one of the generated configuration mappings is selected by the configuration selection unit 40, preferably based on a fidelity measure.

In a step S4, the selected configuration mapping is implemented in the monitoring network N by the control module 20.

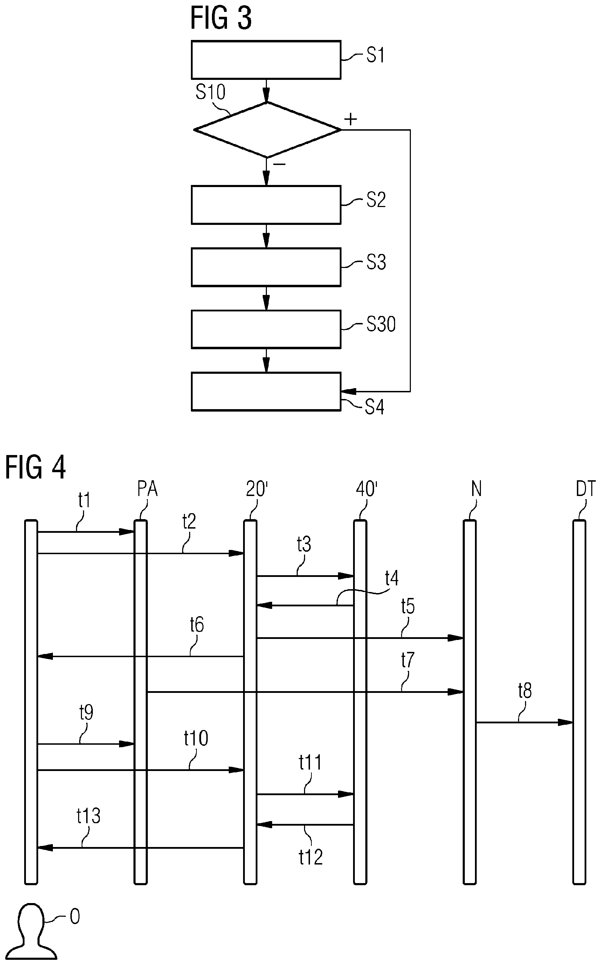

Fig. 3 shows another block diagram of an exemplary embodiment of a computer-implemented method for finding configuration mappings in a monitoring network N, preferably to be implemented with the search system 100 depicted in Fig. 1. As opposed to the embodiment of Fig. 2, the search system 100 comprises a configuration library unit 410 with configuration mappings in storage.

In a step S1, a request for an operation intent related to a physical asset PA is received, e.g. by the control module 20. The sender can be a production operator or a user.

In a step S10, an inspection of the the configuration library unit 410 is performed, in search of a suitable configuration mapping.

If no suitable configuration exists (described with a - symbol in Fig. 3), the method follows the steps S2-S3 already described in Fig. 2. In other words, configuration mappings are generated, out of which one configuration mapping is selected. In an additional step S30, the selected configuration mapping is stored in the configuration library unit 410. In a step S4, it is implemented in the monitoring network N.

If a suitable configuration mapping already exists (depicted with the + symbol), then the method can proceed to step S4, where the configuration mapping is implemented in the monitoring network N.

The method of Fig. 3 might be useful when (a) a quick solution is needed, not necessarily optimal but near-to-optimal; and/or (b) when the configuration library unit 410 already contains a sizeable number of configuration mappings.

In some preferred embodiments, it is imaginable to use first the method depicted in Fig. 3, such that a configuration mapping is implemented without having to pause the operation of the physical assets PA. Then, one can use the method depicted in Fig. 2 to refine the configuration mapping.

Fig. 4 shows a schematic illustration of a use case in a monitoring network N connecting a first physical asset PA1 and a second physical asset PA2 with their corresponding digital twins DT1 and DT2, according to the state of the art. The second column from the left in Fig. 4 comprises the physical assets PA, including in particular the first physical asset PA1 and the second physical asset PA2, which are not explicitly shown. Likewise, the last column from the left in Fig. 4 comprises the digital twins DT, including in particular the first digital twin DT1 and the second digital twin DT2, which are not explicitly shown.

At a time t1, a production operator O configures the first physical asset PA1, e.g. by introducing some modification to its current state.

At a time t2, the production operator O sends a request for an operation intent corresponding to the introduced modification to the physical asset PA1, which is received by a control module 20'.

At a time t3, the control module 20' communicates the operation intent to a configuration selection module 40', which returns a basic configuration mapping at a time t4.

At a time t5, the control module 20' configures the monitoring network N with the basic configuration mapping and, at a subsequent time t6, sends the production operator O an invitation that the operation can be transmitted.

At a time t7, the transmission from the first physical asset PA1 to the monitoring network N starts, and at a time t8 is transmitted to the first digital twin DT1, which thereby gets updated.

From that moment on, the production operator O can use the updated first digital twin DT1 for, e.g., simulations, predictions or evaluation of what-if scenarios.

At a time t9, the production operator O configures the second physical asset PA2, e.g. by introducing some modification to its current state.

At a time t10, the production operator O sends a request for an operation intent corresponding to the introduced modification to the physical asset PA2, which is received by the control module 20'.

At a time t11, the control module 20' communicates the operation intent to the configuration selection module 40'. The basic configuration mappings that the configuration selection module 40' has cannot support the simultaneous operation of the two physical assets PA1 and PA2. Accordingly, at a time t12, the configuration selection module 40' communicates to the control module 20' that no basic configuration mapping exists.

At a time t13, the control module 20' communicates to the production operator O that the request for the operation intent cannot be supported by the monitoring network N. The simultaneous operation of the two physical assets PA1 and PA2 can take place only after a human-based search for a suitable configuration mapping takes place. Until then, the simultaneous operation of the physical assets PA1 and PA2 cannot be guaranteed.

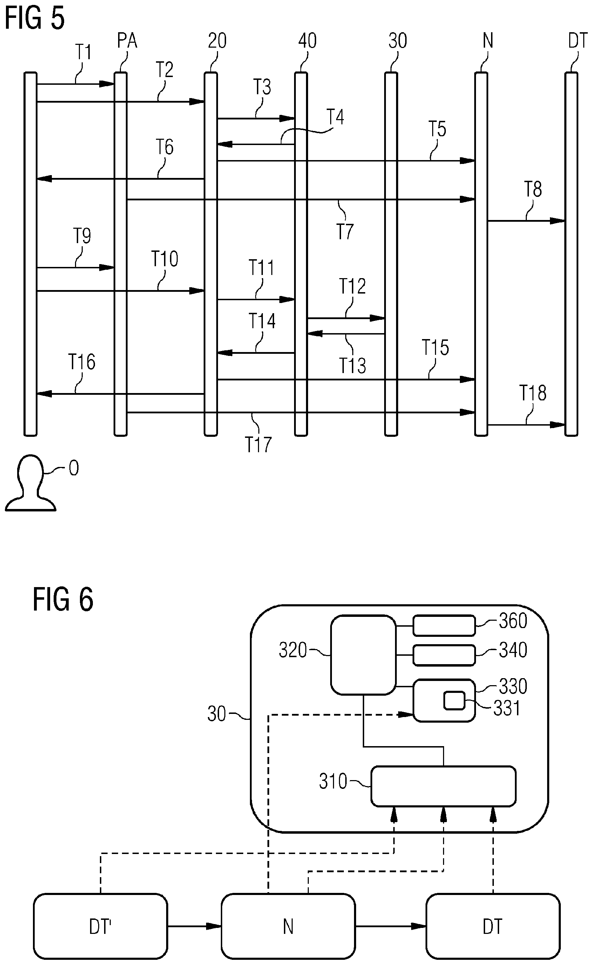

Fig. 5 shows a schematic illustration of a use case in a monitoring network N connecting a first physical asset PA1 and a second physical asset PA2 with their corresponding digital twins DT1 and DT2, according to an embodiment of the present invention. To make the comparison with Fig. 4 simpler, the physical assets PA1 and PA2, the monitoring network N and the production operator O will be taken to be the same as in Fig. 4. As in Fig. 4, the column denoted with PA includes, in particular, the first physical asset PA1 and the second physical asset PA2, which are not explicitly shown. Likewise, the column denoted with DT includes, in particular, the first digital twin DT1 and the second digital twin DT2, which are not explicitly shown.

At a time T1, a production operator O configures the first physical asset PA1, e.g. by introducing some modification to its current state.

At a time T2, the production operator O sends a request for an operation intent corresponding to the introduced modification to the physical asset PA1, which is received by the control module 20 of the present invention.

At a time T3, the control module 20 communicates the operation intent to the configuration selection module 40. In the embodiment shown in Fig. 5, a suitable configuration mapping already exists for the requested operation intent, which can be for instance stored in the configuration library unit 410 as the result of a previous search performed by the configuration finder module 30.

At a time T4, the configuration selection module 40 returns the suitable configuration mapping to the control module 20.

At a time T5, the control module 20 configures the monitoring network N with the suitable configuration mapping and, at a subsequent time T6, sends the production operator O an invitation that the operation can be transmitted.

At a time T7, the transmission from the first physical asset PA1 to the monitoring network N starts, and at a time T8 it is transmitted to the first digital twin DT1, which thereby gets updated.

From that moment on, the production operator O can use the updated first digital twin DT1 for, e.g., simulations, predictions or evaluation of what-if scenarios.

At a time T9, the production operator O configures the second physical asset PA2, e.g. by introducing some modification to its current state.

At a time T10, the production operator O sends a request for an operation intent corresponding to the introduced modification to the physical asset PA2, which is received by the control module 20.

At a time T11, the control module 20 communicates the operation intent to a configuration selection module 40, which finds no existing configuration mapping that matches the current network demands and sends the corresponding information to the configuration finder module 30.

At a time T12, the configuration finder module 30 starts the search for a configuration mapping that can support the simultaneous operation of the physical assets PA1 and PA2 according to the operation intents communicated by the production operator O.

As already mentioned in the description corresponding to Fig. 1, the configuration finder module 30 can comprise a search unit 320, which implements a search algorithm, possibly incorporating artificial intelligence elements. The search algorithm can use, as input for the search, information about the current state of the physical assets PA1 and PA2, the monitoring network N and the digital twins DT1 and DT2, which is obtained by the data-acquisition unit 310. The search algorithm can be improved by using a fidelity unit 360, an optimization unit 340 and a virtual network unit 330, as mentioned in the description corresponding to Fig. 1.

At a time T13, the configuration finder module 30 communicates the generated configuration mappings to the configuration selection module 40, which selects one of them and communicates it, at a time T14, to the control module 20.

At a time T15, the control module 20 configures the monitoring network N with the selected configuration mapping and, at a subsequent time T16, sends the production operator O an invitation that the operation can be transmitted.

At a time T17, the transmission from the second physical asset PA2 to the monitoring network N starts, and at a time T18 is transmitted to the second digital twin DT2, which thereby gets updated.

From that moment on, the production operator O can use simultaneously the updated first digital twin DT1 and second digital twin DT2 for, e.g., simulations, predictions or evaluation of what-if scenarios.

Fig. 6 is a schematic depiction of the elements involved for the improvement of the network digital twin according to an embodiment of the present invention.

Improvements on the network digital twin provide better input to the search algorithm and more accurate configuration mappings, i.e., configuration mappings with a higher fidelity measure.

The embodiment depicted in Fig. 6 shows the monitoring network N, a first digital twin DT' and a second digital twin DT, where the two digital twins DT, DT' both correspond to the same physical asset (not shown in the figure) and are connected through the monitoring network. For simplicity, out of the search system 100, only the configuration finder module 30 is shown in Fig. 6.

The first digital twin DT' can be generated with the same monitoring network N or with a different network.

The operation of the network digital twin, generated by the virtual network unit 330, can be improved by simulating operation intents on the first digital twin DT' and observing the effects on the second digital twin DT.

An improvement of the network digital twin can be achieved by collecting, through the data-acquisition unit 310, both data about the operation of the first digital twin DT' and data about the digital twin DT, which replicates the operation of the digital twin DT' through the monitoring network N. A comparison of both data sources brings information about the operation of the monitoring network N in the replication and can be employed to improve the network digital twin.

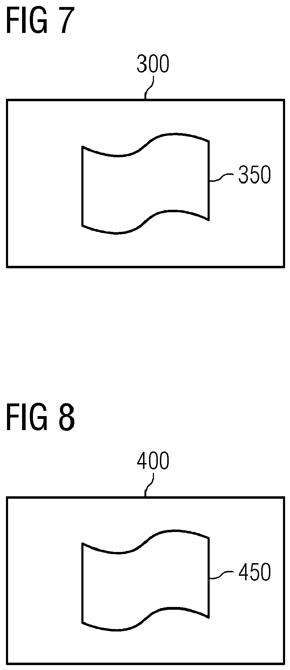

Fig. 7 shows a schematic block diagram illustrating a computer program product 300 according to an embodiment of the third aspect of the present invention. The computer program product 300 comprises executable program code 350 configured to, when executed, perform the method according to any embodiment of the second aspect of the present invention, in particular as it has been described with respect to the preceding figures.

Fig. 8 shows a schematic block diagram illustrating a non-transitory computer-readable data storage medium 400 according to an embodiment of the fourth aspect of the present invention. The data storage medium 400 comprises executable program code 450 configured to, when executed, perform the method according to any embodiment of the second aspect of the present invention, in particular as it has been described with respect to the preceding figures.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

The previous description of the disclosed embodiments are merely examples of possible implementations, which are provided to enable any person skilled in the art to make or use the present invention. Various variations and modifications of these embodiments will be readily apparent to those skilled in the art, and the generic principles defined herein may be applied to other embodiments without departing from the spirit or scope of the present disclosure. Thus, the present invention is not intended to be limited to the embodiments shown herein but it is to be accorded the widest scope consistent with the principles and novel features disclosed herein. Therefore, the present invention is not to be limited except in accordance with the following claims.

## Claims

1. A search system (100) for finding configuration mappings in a monitoring network (N) connecting physical assets (PA, PA1, PA2) with their associated digital twins (DT, DT', DT1, DT2), the search system (100) comprising:
a control module (20), configured to receive a request of operation intent related to a physical asset (PA, PA1, PA2) and to implement a configuration mapping in the monitoring network (N);
a configuration finder module (30), configured to generate configuration mappings, based on the operation intent related to the physical asset (PA, PA1, PA2); and
a configuration selection module (40), configured to select one of the generated configuration mappings and send it to the control module (20) for its implementation in the monitoring network (N).

2. The system (100) according to claim 1, wherein the configuration finder module (30) comprises a fidelity unit (360), configured to generate a fidelity measure for each configuration mapping based on a comparison between a physical asset (PA, PA1, PA2) and its associated digital twin (DT, DT', DT1, DT2).

3. The system (100) according to claim 2, wherein the configuration finder module (30) is configured to search for alternative configuration mappings to the implemented configuration mapping offline and/or at runtime and rank them according to their fidelity measures.

4. The system (100) according to claim 3, wherein the configuration finder module (30) is further configured to send the alternative configuration mapping with the highest fidelity measure to the configuration selection module (40) for its implementation.

5. The system (100) according to any of the preceding claims, wherein the configuration selection unit (40) comprises a configuration library unit (410), configured to store the configuration mappings found by the configuration finder module (30).

6. The system (100) according to any of the preceding claims, wherein the configuration finder module (30) comprises a data-acquisition unit (310), configured to acquire data from the physical assets (PA, PA1, PA2), the digital twins (DT, DT', DT1, DT2) and the monitoring network (N).

7. The system (100) according to any of the preceding claims, wherein the configuration finder module (30) comprises a search unit (320) and/or is connected through an interface to an external search unit, wherein the search unit (320) and the external search unit are configured to implement a search algorithm.

8. The system (100) according to any of the preceding claims, wherein the configuration finder module (30) comprises a virtual network unit (330), configured to generate a digital twin of the monitoring network (N).

9. The system (100) according to claims 7 and 8, wherein the search algorithm implemented in the search unit (320) and/or in the external search unit is adapted to use the digital twin of the monitoring network (N) generated by the virtual network unit (330) as input.

10. The system (100) according to claims 7 and 8, wherein the virtual network unit (330) comprises a processing unit (331), configured to process the digital twin of the monitoring network (N), wherein the search algorithm is adapted to use the processed digital twin of the monitoring network (N) as a variable.

11. The system (100) according to claim 7, wherein the configuration finder module (30) comprises an optimization unit (340), configured to implement an artificial intelligence entity, which is trained and adapted to improve the search algorithm of the search unit (320).

12. The system (100) according to claim 8, wherein the virtual network unit (330) is further configured to acquire data from a first digital twin (DT') of a physical asset (PA) and a second digital twin (DT) of the same physical asset (PA), wherein the second digital twin (DT) is generated from the first digital twin (DT') using the monitoring network (N).

13. A computer-implemented method for finding configuration mappings in a monitoring network (N) connecting physical assets (PA, PA1, PA2) with their associated digital twins (DT, DT', DT1, DT2), preferably to be implemented with the search system (100) according to any of the claims 1 to 12, comprising the following steps:
receiving (S1) a request of operation intent related to a physical asset (PA, PA1, PA2);
generating (S2) configuration mappings based on the operation intent related to the physical asset (PA, PA1, PA2);
selecting (S3) one of the generated configuration mappings; and
implementing (S4) the selected configuration mapping in the monitoring network (N).

14. A computer program product (300) comprising executable program code (350), which is configured, when executed, to perform the computer-implemented method according to claim 13.

15. A non-transient computer-readable data storage medium (400) comprising executable program code (450), which is configured, when executed, to perform the computer-implemented method according to claim 13.
